# FASCICULE DE BREVET EUROPEEN

(11) **EP 2 655 877 B1**
(45) Date de publication et mention de la délivrance du brevet: **06.04.2016**
(21) Numéro de dépôt: 11807716.3
(22) Date de dépôt: 14.12.2011
(51) Int. Cl.: F03D 13/25, F03D 7/02, F03D 7/04

(54) **ÉOLIENNE EN OFFSHORE FLOTTANT COMPORTANT UN SYSTÈME DE STABILISATION ACTIF EN INCLINAISON DE LA NACELLE**
SCHWIMMENDE OFFSHORE WINDTURBINE MIT AKTIVEM STABILISIERUNGSSYSTEM DER GONDELNEIGUNG
FLOATING OFFSHORE WIND TURBINE WITH A SYSTEM OF ACTIVE STABILISATION OF THE INCLINATION OF THE NACELLE

(30) Priorité: 23.12.2010 FR 1005063
(43) Date de publication de la demande: 30.10.2013
(73) Titulaire: IFP Énergies nouvelles, 92852 Rueil-Malmaison Cedex (FR)
(72) Inventeur: WITTRISH, Christian, F-92500 Rueil Malmaison (FR); LONGUEMARE, Pascal, F-78100 Saint Germain En Laye (FR)
(86) Numéro de dépôt international: PCT/FR2011/000649
(87) Numéro de publication internationale: WO 2012/085351

(56) Documents cités:
- EP-A1- 2 171 271
- EP-A2- 1 683 965
- WO-A1-03/098038
- WO-A1-2010/098814
- CH-A5- 695 790
- JP-A- 2010 196 591
- US-A1- 2004 076 518
- US-B1- 6 327 957

## Description

L'objet de cette invention concerne les éoliennes installées en mer sur un support flottant et plus particulièrement les systèmes de maintien de l'axe de rotation des pales suivant une direction imposée par rapport à la direction réelle du vent, cela pour tous mouvements du support de l'éolienne, c'est-à-dire le mat et son support flottant.

Dans le cas d'une éolienne standard, la nacelle peut porter trois pales (par exemple de longueur environ 60 m) fixées à un rotor qui entraine, par l'intermédiaire d'un réducteur de vitesse, une génératrice électrique et des accessoires tels que le système d'orientation des pales, des transformateurs électriques, un système hydraulique, la ventilation. La structure de la nacelle repose sur une couronne d'orientation, elle-même supportée par le mat.

La nacelle est en permanence orientée en azimut pour avoir le plan de rotation des pales mis face au vent. Pour cela la nacelle est mobile en rotation par rapport à l'axe du mat, par l'entrainement d'un (ou de plusieurs) engrenages motorisés, coopérant avec une couronne dentée. L'ensemble d'une nacelle peut peser de l'ordre de 200 à 300 tonnes.

Le mat, de hauteur environ 100 m, supportant la nacelle repose sur un support flottant maintenu et sensiblement stabilisé par des lignes d'ancres, dans le cas de profondeurs d'eau supérieures 100 m.

La nacelle de l'éolienne est soumise à de nombreuses forces et contraintes liée à la vitesse du vent. Cela se traduit par une poussée sur les pales supportée par une butée tournante ayant sa partie mobile solidaire de l'axe du rotor.

Cette force de poussée, ou force axiale, orientée suivant la direction du vent, a une valeur qui est dépendante de l'angle de chaque pale ("pitch") par rapport à la direction du vent.

Dans le cas d'éolienne sur support flottant, le support flottant est soumis à différentes forces provenant des effets combinés du vent, des vagues, des courants marins, des lignes d'ancrages, des effets du mat sur le support flottant, de son inclinaison et de sa flexion par les forces appliquées dues au vent et à la nacelle.

Le système "éolienne sur support flottant" est soumis à un ensemble de forces complexes agissant suivant différentes directions, ayant différentes valeurs, statiques, périodiques, apériodiques. Ces forces, liées et interdépendantes, proviennent des effets du vent sur les pales et la nacelle, du mat, du support flottant, des lignes d'ancrages et des effets du vent, des vagues et des courants sur ce support flottant.

C'est la direction du vent qui impose la direction de la force axiale appliquée au rotor puisque le plan de rotation des pales doit être orienté en permanence perpendiculaire à la direction du vent, et cela pour obtenir une absorption maximum de l'énergie au vent pour un meilleur rendement ou d'efficacité.

La direction du vent dans l'espace peut être définie par deux angles: - l'angle d'inclinaison que fait la direction du vent par rapport au plan horizontal pris comme référence et - l'angle d'azimut que fait, dans ce même plan horizontal, la direction du vent avec la direction du champ magnétique terrestre pris comme référence.

Les éoliennes conventionnelles actuellement utilisées à terre ou en mer sur support fixe ou flottant, comportent une nacelle mobile en rotation suivant l'axe du mat pouvant être orientée en azimut. Mais, aucune éolienne comporte des moyens actifs de contrôle de l'inclinaison de la nacelle par rapport à la référence horizontale en fonction des déplacements périodiques dus à la flottaison du support, ou des variations de direction du vent.

Ainsi, la présente invention concerne une éolienne.

La nacelle peut être articulée autour d'un arbre horizontal et reposer sur une butée en secteur circulaire centré sur l'axe dudit arbre.

La nacelle peut comporter un système de transfert de masse de façon à déplacer le centre de gravité de l'ensemble suspendu.

Une masse peut être transférée sur une glissière.

Une masse de liquide peut être transférée par pompage.

Le secteur circulaire peut comporter un système denté coopérant avec un pignon motorisé selon les moyens de réglage automatique.

La nacelle peut comporter des moyens de déplacement du point d'articulation de façon à déplacer le centre de gravité de l'ensemble suspendu, par rapport au mat.

L'invention sera mieux comprise et ses avantages apparaîtront plus clairement à la lecture des exemples ci-après, nullement limitatifs, et illustrés par les figures ci-après annexées, parmi lesquelles:
- la figure 1 montre schématiquement une éolienne offshore,
- les figures 2 et 3 montrent schématiquement deux modes de réalisation,
- la figure 4 montre le principe de la nacelle articulée et supportée par sa base,
- les figures 5 et 6 montrent schématiquement le transfert de masse d'équilibrage,
- les figures 7 et 8 montrent schématiquement des moyens de déplacement du centre de gravité de l'ensemble suspendu.

L'objet de la présente invention concerne la stabilisation active de la nacelle d'une éolienne au moyen d'actuateurs pour la maintenir en permanence orientée suivant l'axe réel du vent repéré en inclinaison et en azimut.

La nacelle est solidaire du mat et de son support. Pour cela l'orientation de la nacelle suivant l'axe réel du vent doit se faire pour tous angles d'inclinaison et d'azimut du mat et pour tous mouvements périodiques ou apériodiques, d'amplitudes variables, mouvements liés à la flexibilité du mat et au déplacement de son support, en particulier flottant.

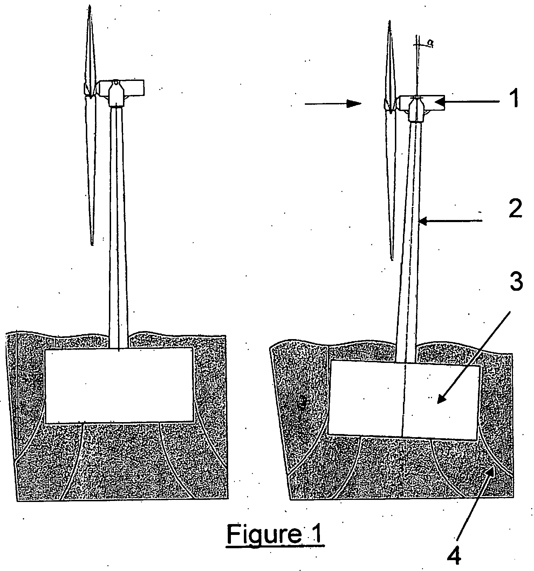

La figure 1 montre schématiquement une éolienne offshore dont la nacelle 1 portée par le mat 2, oscille d'un angle α suivant l'oscillation du support flottant 3 amarré par des lignes d'ancrage 4. L'objet de la présente invention est d'équiper la nacelle d'un système de correction du plan de rotation des pales portées par la nacelle, en continu en fonction des oscillations du support flottant, ou des flexions du mat.

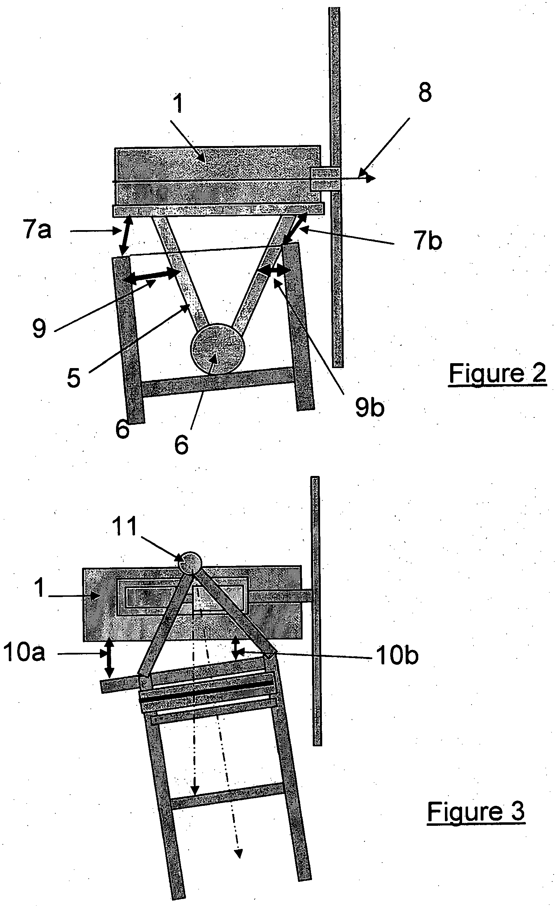

Les figures 2 et 3 montrent schématiquement deux modes de réalisation, dans leur principe.

La figure 2 montre le principe du pendule inversé, la nacelle 1 étant supportée par un berceau 5 en équilibre instable sur un arbre de rotation 6 situé en dessous du centre de gravité de l'ensemble mobile, c'est-à-dire de la nacelle et du berceau. Des moyens d'activation 7a et 7b, ou 9a et 9b, représentés par des flèches, contrôlent la position de l'axe 8 de la nacelle, par rapport à une référence.

La figure 3 montre le principe du pendule suspendu, ou balançoire, où la nacelle est suspendue sur un arbre de rotation supérieur 11. Des moyens d'activation 10a et 10b, représentés par des flèches, contrôlent la position de l'axe 8 de la nacelle, par rapport à une référence.

Pour ces deux principes, les moyens d'activation sont adaptés à agir en dynamique pour la stabilisation de la nacelle de façon à effectuer des corrections synchronisées avec la fréquence des oscillations.

Les directions de références ; inclinaison et azimut par rapport, respectivement à l'horizontale et le nord magnétique sont données par des capteurs conventionnels. De plus, d'autres capteurs de mesures de type, inclinomètre et accéléromètre à trois axes disposés sur la partie mobile (nacelle) et le support oscillant (mat), girouette, ou de mesures par un faisceau laser pour le repérage de la direction du vent, la mesure de la vitesse du vent, les mesures de température et de pression, sont couplés au système de contrôle de commande automatique des moyens d'activation de stabilisation statique ou dynamique de la nacelle par rapport au mat.

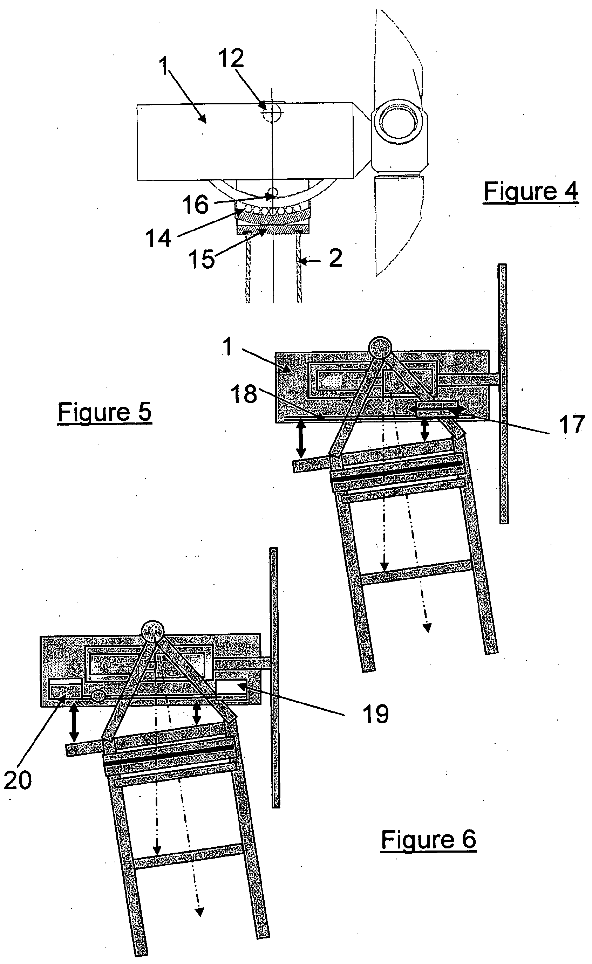

La figure 4 montre un autre mode de réalisation dont le principe s'apparente à celui d'une nacelle suspendue par un arbre de rotation, mais est complété par un support inférieur à la nacelle permettant de mieux répartir les charges et ainsi reprendre le poids de la nacelle sans entièrement solliciter l'axe de rotation 12.

Sur la figure 4, la nacelle est tenue par un arbre 12 permettant un réglage d'inclinaison. Une portion de couronne 13 solidaire de la nacelle repose sur une portion de couronne 14 solidaire de l'extrémité du mat 2 par l'intermédiaire d'une couronne d'orientation en azimut 15. Des rouleaux intercalés entre les deux couronnes permettent le déplacement relatif entre les deux couronnes lors d'une variation inclinaison, tout en supportant les efforts de compression dus au poids de la nacelle et des pales. La couronne 13 liée à la nacelle comporte des dents d'engrenage pour coopérer avec un pignon 16 motorisé. Dans ce mode de réalisation, l'arbre de rotation ne supporte plus la totalité des charges.

Bien entendu, d'autres moyens mécaniques à la portée de l'homme du métier peuvent être utilisés pour faire tourner la partie mobile par rapport à la partie fixe.

En ce qui concerne le mode de réalisation pendulaire, deux système de stabilisation sont envisageables, couplés ou utilisés simultanément:
- Des moyens stabilisation "statiques" qui utilisent le principe d'équilibrage du poids de la nacelle soumise à différentes forces appliquées comme l'effet de poussée du vent sur les pales. Cette stabilisation statique utilise l'effet de la force de gravité sur un pendule. En complément, des systèmes adaptatifs peuvent déplacer le centre de gravité de la nacelle pour, soit compenser des forces externes variables (vent, effet gyroscopiques, ...), soit permettre d'avoir un temps de réponse suffisamment rapide du système automatique de réglage.

Les figures 5 et 6 illustrent deux moyens de stabilisation dit "statiques". La figure 5 montre le transfert d'une masse 17 liée à la nacelle 1, sur un rail ou équivalent 18. Cette masse modifie la position du centre de gravité par rapport à l'axe de l'arbre de rotation, ce qui fournit un bras de levier qui développe un couple de rappel. La fréquence du déplacement de la masse d'équilibrage 17 est donc sensiblement du même ordre que la fréquence des oscillations que l'on doit compenser. La figure 6 est dans le même principe, mais la masse transférée est un volume de liquide déplacé par pompage entre deux réservoirs 19 et 20.

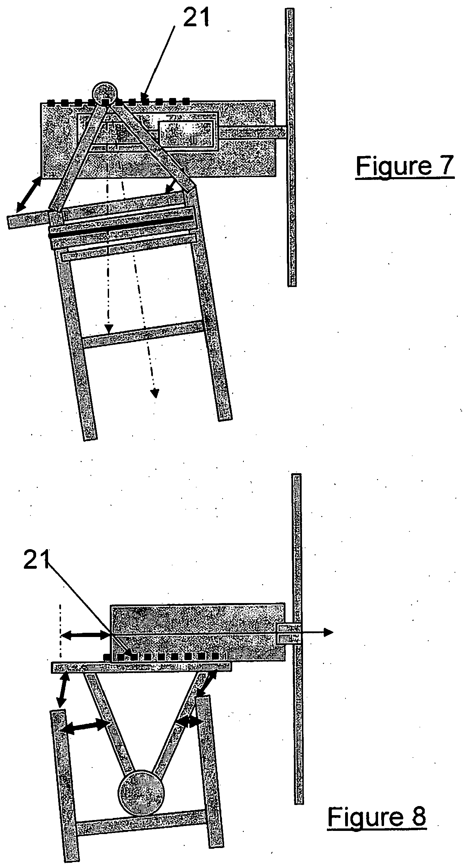

Les figures 7 et 8 montre le principe dans lequel l'ensemble suspendu, nacelle et pales, se déplace sur un rail 21 suivant un axe parallèle au rotor, relativement à l'axe de rotation lié au mat. Le déplacement de la nacelle suivant cet axe déplace son centre de gravité par rapport à son axe de rotation. Ainsi, c'est toute la masse de la nacelle qui contribue à son positionnement et non plus une masse additionnelle annexe, solide ou liquide, à déplacer. La figure 7 montre la variante articulée suspendue et la figure 8 montre la variante articulée instable.
- Des moyens de stabilisation "dynamiques" par des vérins hydrauliques, des vérins électriques, ou par des systèmes électro- mécaniques d'engrenages à crémaillères ou pignons sur couronnes. Un objectif est d'utiliser un minimum de puissance pour corriger les mouvements en inclinaison périodiques de la nacelle par rapport au mat, les mouvements de la nacelle étant de type périodiques ou apériodiques avec des amplitudes angulaires limitées.

On note que l'axe de rotation de la nacelle peut être décalé, en avant ou en arrière, par rapport au centre de gravité de la nacelle. En effet, la poussée du vent à tendance à faire fléchir le mat dans la direction opposée à celle du vent, l'axe de rotation de la nacelle peut être décalé, positionné légèrement en arrière du centre de gravité de la nacelle pour permettre à la nacelle en l'absence de vent de s'incliner naturellement par l'action du poids de la nacelle.

Les avantages de cette invention peuvent notamment être:
- La nacelle est standard contenant le multiplicateur de vitesse et la génératrice,
- utilisation de la force gyroscopique de rotation des pales par le vent suivant une direction verticale (haut ou bas),
- utilisation de l'effet pendulaire direct ou inverse suivant la variante proposée,
- correction en continu de l'inclinaison, avec des moyens nécessitant peu de puissance.

L'axe de l'arbre de rotation de la nacelle est de préférence relativement proche de l'axe du rotor de la nacelle.

Le rotor est l'axe d'entraînement des pales, le rotor est relié, dans le cas général, au multiplicateur de vitesse et à la génératrice. La force de poussée du vent sur le plan de rotation des pales, de surface par exemple 10 000m², est considérable. Cette force de poussée du vent est transmise par les pales au rotor et à la nacelle. Pour éviter un très important couple de rotation produit par la force axiale de poussée sur le rotor sur la distance entre l'axe du rotor et l'axe de rotation de la nacelle, la distance entre l'axe de rotation de la nacelle et l'axe du rotor doit être optimisée. En présence de vent, la force de poussée du vent a tendance à faire incliner le mat à l'opposé de la direction du vent et donc à faire relever l'avant de la nacelle. Lorsque la nacelle est mobile autour de son axe de rotation et que suivant l'option retenue cet axe de rotation est situé au dessus de l'axe du rotor, le couple de rotation appliqué par la force de poussé du vent sur l'axe du rotor a tendance à faire baisser l'avant de la nacelle pour la remettre suivant l'axe du vent.

L'optimisation du point de rotation de la nacelle en axial et radial par rapport à son centre de gravité et par rapport à l'axe de rotation du rotor réduira les efforts de correction à appliquer pour maintenir la nacelle horizontale.

## Revendications

1. Éolienne comportant une nacelle (1) installée sur un mat (2) supporté par un support flottant, **caractérisée en ce que** la nacelle est articulée par rapport audit mat dans un plan vertical, et **en ce qu'**elle comporte des moyens de correction de l'inclinaison de la nacelle, des moyens de réglage automatique desdits moyens de correction en fonction de capteurs de détection des valeurs de correction, lesdits moyens de réglage étant synchrone avec les mouvements du support flottant et étant configurés pour maintenir la nacelle en permanence orientée suivant l'axe réel du vent repéré en inclinaison et en azimut, et **en ce que** ladite nacelle est articulée et suspendue sur un arbre horizontal.

2. Éolienne selon la revendication 1, dans laquelle la nacelle est articulée autour de l'arbre horizontal et repose sur une butée en secteur circulaire centré sur l'axe dudit arbre.

3. Éolienne selon la revendication 2, dans laquelle la nacelle comporte un système de transfert de masse de façon à déplacer le centre de gravité de l'ensemble suspendu.

4. Éolienne selon la revendication 3, dans laquelle une masse est transférée sur une glissière.

5. Éolienne selon la revendication 3, dans laquelle une masse de liquide est transférée par pompage.

6. Éolienne selon la revendication 2, dans laquelle le secteur circulaire comporte un système denté coopérant avec un pignon motorisé selon les moyens de réglage automatique.

7. Éolienne selon la revendication 1, dans laquelle la nacelle comporte des moyens de déplacement du point d'articulation de façon à déplacer le centre de gravité de l'ensemble suspendu, par rapport au mat.

## Patentansprüche

1. Windenergieanlage, umfassend eine Gondel (1), die auf einem Masten (2) installiert ist, der von einem schwimmenden Träger getragen wird, **dadurch gekennzeichnet, dass** die Gondel in Bezug zu dem Masten in einer Vertikalebene gelenkig angeordnet ist, und dass sie Mittel zur Korrektur der Neigung der Gondel, Mittel zur automatischen Einstellung der Korrekturmittel in Abhängigkeit von Sensoren zur Erfassung der Korrekturwerte umfasst, wobei die Einstellungsmittel mit den Bewegungen des schwimmenden Trägers synchron und derart konfiguriert sind, dass sie die Gondel permanent entlang der realen Achse des Windes, die in Neigung und Azimut erfasst wird, orientiert haltend sind, und dass die Gondel an einer Horizontalwelle angelenkt und aufgehängt ist.

2. Windenergieanlage nach Anspruch 1, bei der die Gondel um die Horizontalwelle angelenkt ist und auf einem Kreissektoranschlag, der auf die Achse der Welle zentriert ist, aufliegt.

3. Windenergieanlage nach Anspruch 2, bei der die Gondel ein Massetransfersystem umfasst, um den Schwerpunkt der aufgehängten Einheit zu verlagern.

4. Windenergieanlage nach Anspruch 3, bei der eine Masse auf einer Gleitschiene transferiert wird.

5. Windenergieanlage nach Anspruch 3, bei der eine Flüssigkeitsmasse durch Pumpen transferiert wird.

6. Windenergieanlage nach Anspruch 2, bei der der Kreissektor ein Zahnsystem umfasst, das mit einem motorisierten Ritzel gemäß den Mitteln zur automatischen Einstellung zusammenwirkt.

7. Windenergieanlage nach Anspruch 1, bei der die Gondel Mittel zum Verlagern des Gelenkpunktes umfasst, um den Schwerpunkt der aufgehängten Einheit in Bezug zum Masten zu verlagern.

## Claims

1. A wind turbine comprising a nacelle (1) installed on a tower (2) supported by a floating support, **characterized in that** the nacelle is articulated with respect to said tower in a vertical plane, **in that** it comprises means for correcting the nacelle tilt, means for automatically adjusting said correction means in accordance with sensors detecting the correction values, said adjustment means being synchronous with the movements of the floating support and designed for keeping the nacelle permanently oriented along the real axis of the wind defined in terms of tilt and azimuth, and **in that** said nacelle is articulated and suspended from a horizontal shaft.

2. A wind turbine as claimed in claim 1, wherein the nacelle is articulated around the horizontal shaft and rests on a thrust in a circular sector centered on the axis of said shaft.

3. A wind turbine as claimed in claim 2, wherein the nacelle comprises a mass transfer system for shifting the center of gravity of the suspended assembly.

4. A wind turbine as claimed in claim 3, wherein a mass is transferred on a slide.

5. A wind turbine as claimed in claim 3, wherein a liquid mass is transferred by pumping.

6. A wind turbine as claimed in claim 2, wherein the circular sector comprises a toothed system cooperating with a motorized pinion according to the automatic adjustment means.

7. A wind turbine as claimed in claim 1, wherein the nacelle comprises articulation point displacement means for shifting the center of gravity of the suspended assembly with respect to the tower.
